# EUROPÄISCHE PATENTANMELDUNG

(11) **EP 0 694 364 A1**
(43) Veröffentlichungstag der Anmeldung: **31.01.1996**
(21) Anmeldenummer: 95111487.5
(22) Anmeldetag: 21.07.1995
(51) Int. Cl.: B23Q 16/08

(54) **Spannvorrichtung**

(30) Priorität: 27.07.1994 DE 4426551
(71) Anmelder: Campro Tooling AB, S-183 43 Täby (SE)
(72) Erfinder: Nordquist, Hakan, S-18343 Täby (SE)
(74) Vertreter: Zinngrebe, Horst, Dr.rer.nat.

(57) **Zusammenfassung**

Beschrieben wird eine Spannvorrichtung mit einem ersten (1) und einem zweiten (5) Kupplungsteil sowie mit Mitteln zum Spannen der beiden Kupplungsteile, wobei das an das erste Kupplungsteil angespannte zweite Kupplungsteil eine vorgegebene Lage in wiederholbarer Präzision relativ zum ersten Kupplungsteil einnimmt, welche Lage in Spannrichtung (z-Richtung) durch wenigstens einen Anschlag (4,24) und in einer zur Spannrichtung senkrechten Richtung (x-Richtung) durch Zusammenwirken wenigstens eines wenigstens teilweise konischen und in Spannrichtung sich erstreckenden Zapfens (5) mit mindestens einem in Spannrichtung elastischen Federstück (36) definiert ist. Um die Klemmkraft zwischen Zapfen und Federstück zu verbessern, ist vorgesehen, daß ein die Federcharakteristik des Federstückes beim Zusammenwirken beeinflussendes Organ (46,50) vorhanden ist.

## Beschreibung

Die Erfindung betrifft eine Spannvorrichtung nach dem Oberbegriff des Anspruchs 1.

Aus der Schrift EP-A-255 042 ist eine Spannvorrichtung für einen Werkzeug- insbesondere Elektrodenhalter einer Senkerodiermaschine bekannt, welche aus zwei Kupplungsteilen und einem Zuganker zum Spannen der beiden Kupplungsteile in z-Richtung bis zu einem Anschlag besteht. Der Anschlag ist durch mehrere an der Maschine dauerhaft befestigte und in z-Richtung vorstehende Füße sowie den Füßen zugeordnete Referenzflächen auf dem zweiten Kupplungsteil definiert.

Eine vorgebene Lage des zweiten Kupplungsteils relativ zum ersten Kupplungsteil in einer zur Spannrichtung (z-Richtung) senkrechten x-Richtung erhält das zweite Kuppplungsteil durch Eindringen mehrerer aus der Kupplungsfläche des ersten Kupplungsteils vorstehender, tielweise konischer Zapfen zwischen je ein Paar gegenüberliegender, am zweiten Kupplungsteil ausgebildeter und in Spannrichtung elastischer Lippen.

Eine andere Spannvorrichtung ist aus der Schrift EP-A-111 092 bekannt, bei welcher zur Fixierung der Lage des zweiten Kupplungsteils in x-Richtung Zapfen in Ausschnitte einer zwischen die beiden Kupplungsteile zwischengelegten Federstahlscheibe eindringen, wobei sich gegenüberliegende Kanten der Ausschnitte beiderseits an je einen Zapfen anlegen.

Eine weitere Spannvorrichtung ist aus der Schrift GB-A-1 094 067 bekannt, bei der die Lage des zweiten Kupplungsteils relativ zum ersten Kupplungsteil in x-Richtung durch Eindringen von Zapfen in in Spannrichtung elastische Nuten definiert ist.

Werden derartige Spannvorrichtungen an einer Fräs-, Schleif- oder Drehmaschine benutzt, werden bei der spanenden Werkstückabtragung auf die Wirkverbindung von Zapfen und Federstücken (Lippen, Kanten der Federstahlscheibe, Nuten) erhebliche Kräfte (Vibrationen) ausgeübt, die zu einer Lockerung der Wirkverbindung und damit einer Beeinträchtigung der Ausrichtung des zweiten Kupplungsteils zum ersten Kupplungsteil führen können.

Es ist daher Aufgabe der Erfindung, bei der eingangs genannten Spannvorrichtung die Klemmkraft zwischen Zapfen und Federstücken zu verbessern.

Zur Lösung der Aufgabe ist ein Organ vorgesehen, das die Federcharakteristik des Federstückes beim Zusammenwirken beeinflußt. Dadurch verbessert sich das Klemmverhalten der Federstücke am Zapfen wesentlich, so daß die Klemmung durch Vibrationen oder Seitenkräfte nicht gelockert werden kann.

In bevorzugter Ausführungsform der Erfindung ist das Organ ein Dorn, der das Federstück zweckmäßig entgegen der Spannrichtung beaufschlagt. Das Organ kann auch eine unterhalb des Federstückes angeordnete Stützlippe sein. Der Dorn kann an dem ersten Kupplungsteil ausgebildet sein, obgleich er auch an einem Zuganker oder dergleichen Mittel vorgesehen sein kann, mit deren Hilfe die beiden Kupplungsteile gespannt werden können.

Es empfiehlt sich, den Dorn etwa in der Mitte der radialen Länge des Federstücks, das beispielsweise eine am zweiten Kupplungsteil ausgebildete Lippe oder eine auf das zweite Kupplungsteil aufgesetzte Blattfeder sein kann, anzuordnen. Zur Beeinflussung des Federwegs des Federstücks beim Eindringen des Zapfens kann in bevorzugter Ausgestaltung der Erfindung eine am zweiten Kupplungsteil ausgebildete Stützfeder vorgesehen sein, deren radiale Länge zweckmäßig kürzer als die des Federstücks ist. Die Anordnung kann dann so getroffen sein, daß der Dorn das Federstück beaufschlagt, wenn es von der Stützfeder unterfaßt ist. Dabei kann der Dorn aus einem hartelastischen Werkstoff bestehen und/oder im ersten Kupplungsteil in Spannrichtung federnd gehalten sein.

Nachstehend wird die Erfindung anhand der in der beigefügten Zeichnung dargestellten Ausführungsbeispiele im einzelnen beschrieben. Es zeigen:

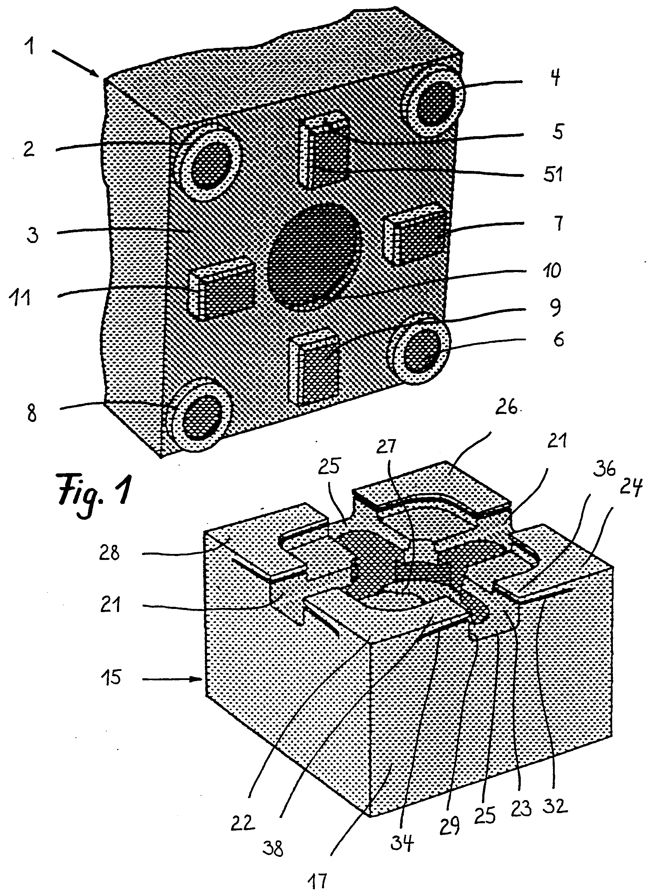

- Fig. 1: eine schematische perspektivische Ansicht eines ersten und eines zweiten Kupplungsteils;
- Fig. 2: einen Vertikalschnitt durch eine Hälfte der beiden Kupplungsteile kurz vor dem Spannen;
- Fig. 3: eine der Fig. 2 ähnliche Darstellung kurz vor dem Ende des Anspannens;
- Fig. 4: eine der Fig. 2 ähnliche Darstellung, bei der die beiden Kupplungsteils gespannt sind;
- Fig. 5: eine schematische Darstellung zur Erläuterung der beim Spannen der beiden Kupplungsteile auftretenden Kräfte;
- Fig. 6 und Fig. 7: eine weitere Ausführungsform der Erfindung.

Ohne Beschränkung der Allgemeinheit in der Anwendbarkeit und den Merkmalen der Erfindung wird diese nachstehend anhand einer Spannvorrichtung beschrieben, wie sie im einzelnen in der Schrift EP-A-255 042 dargestellt und erläutert ist. Die Kenntnis des Inhalts dieser Schrift wird hier mit einbezogen und vorausgesetzt.

Das erste Kupplungsteil 1 ist danach am Kopf einer Werkzeugmaschine, beispielsweise einer Senkerodiermaschine, befestigt. Von ihrer ebenen Kupplungsfläche 3 stehen vier etwa in den Ecken eines Quadrats angeordnete Füße 2, 4, 6, 8 sowie vier Zapfen 5, 7, 9, 11 vor. In der Mitte der Kupplungsfläche 3 befindet sich eine Öffnung 10 für den Durchtritt eines nicht dargestellten Zugankers.

Das zweite Kupplungsteil 15 dient als Elektrodenhalter und besitzt vier ebene Oberflächenabschnitte 22, 24, 26, 28, die plangeschliffen sind und in einer Ebene liegen. Die vier Oberflächenabschnitte 22, 24, 26, 28 sind durch zwei mittig kreuzweise angelegte und von den Seitenflächen des zweiten Kupplungsteils 15 ausgehende tiefe Nuten 21, 25 voneinander getrennt. Im mittigen Kreuzungsbereich der beiden Nuten 21, 25 ist in das zweite Kupplungsteil 15 eine tiefere Einsenkung 27 mit Arretiermitteln zum Einsetzen des Zugankers ausgebildet.

In je zwei gegenüberliegende Flanken der Nuten 21, 25, die von den Seitenflächen des zweiten Kupplungsteils 15 ausgehen, beispielsweise in die Flanken 23, 29 der Nut 25 an der Seitenfläche 17, sind tiefe Einschnitte in das Material des zweiten Kupplungsteils 15 eingebracht, die an den Flanken 23, 29 mit 32, 34 bezeichnet sind. Dadurch entstehen an den zu den Nuten weisenden Endabschnitten der Oberflächenbereiche 22, 24, 26, 28 Lippen, beispielsweise die Lippen 36, 38, die senkrecht zu den Oberflächenbereichen elastisch sind.

Nachfolgend wird die Erfindung nur im Bereich der Lippe 36 und der Nut 25 im einzelnen mit dem Bemerken beschrieben, daß die beiden Kupplungsteile in den Bereichen der übrigen Lippen, insbesondere der zum Mittelpunkt des Kreuzungsbereichs der Nuten 21, 25 symmetrisch liegenden Lippen in gleicher Weise ausgestaltet sind.

In die Flanke 23 ist unterhalb des Einschnitts 34 ein weiterer Einschnitt 44 eingetrieben, und zwar etwa nur bis zur Hälfte des Einschnitts 34. Dadurch ist unterhalb der Lippe 36 eine Stützlippe 46 geschaffen.

Aus der Kupplungsfläche 3 steht zwischen dem Zapfen 5 und dem Fuß 4 ein im Querschnitt dreieckförmiger Dorn 50 vor, und zwar um eine Länge d, die geringfügig größer ist als die Erhebung des Fußes 4 über die Kupplungsfläche 3. Der Zapfen 5 besitzt in bekannter Weise den Zapfenquerschnitt verjüngende gegenüberliegende Schrägflächen 51, 53. An seiner freien Stirnfläche besitzt der Zapfen 5 eine Breite, die kleiner ist als die Weite der Nut 25 zwischen gegenüberliegenden Lippen 36, 38. An seiner Basis ist der Zapfen 5 breiter als die Weite der Nut 25.

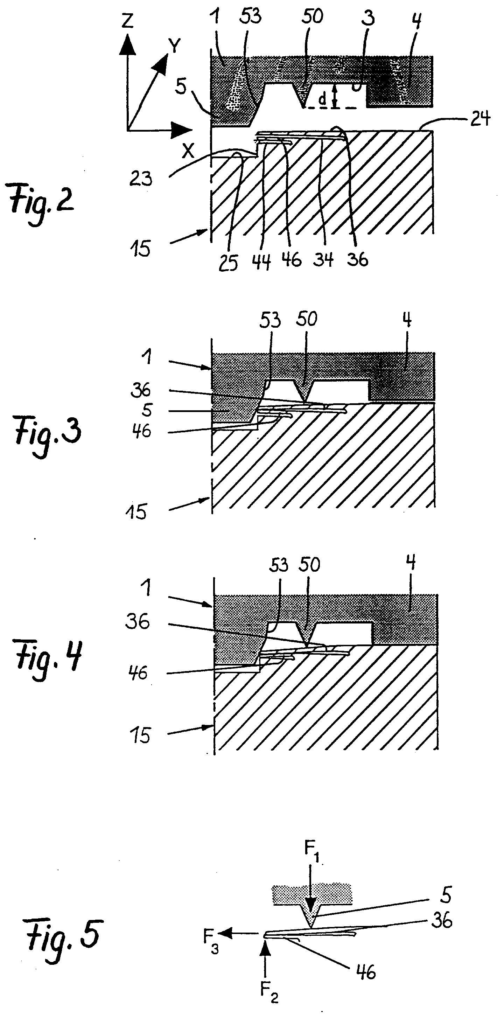

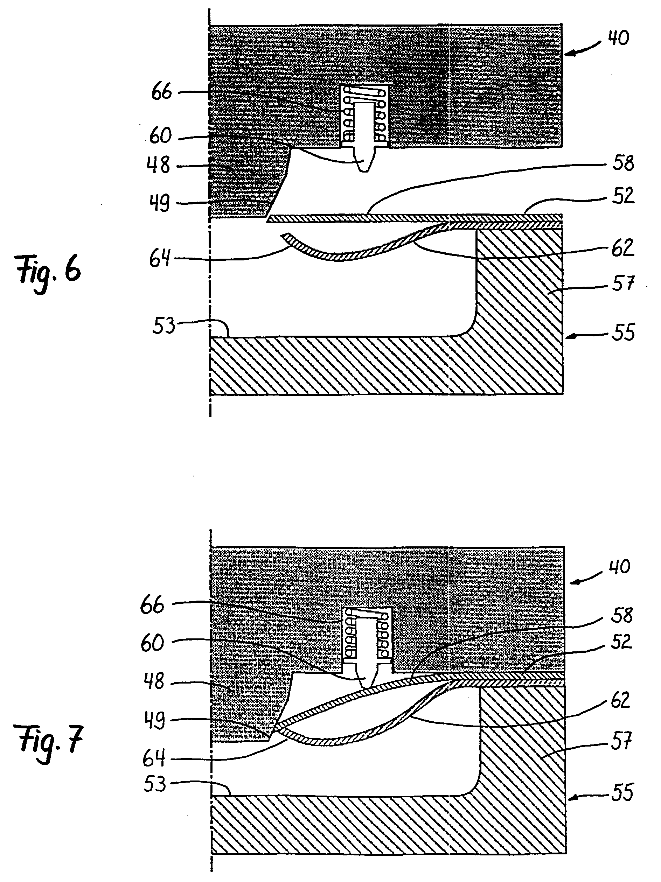

Die Figuren 3 bis 5 erläutern den Spannvorgang. Bei Annähern des beweglichen Kupplungsteils 15 von unten gegen das feststehende Kupplungsteil 1 dringt das freie Endes des Zapfens 5 in die Nut 25 mit der Folge ein, daß die schrägen Seitenflächen 51, 53 von den freien Kanten der Lippen 36, 38 ergriffen werden. Beim weiteren Eindringen des Zapfens 5 in die Nut 25 aufgrund des Anziehens des zweiten Kupplungsteils 15 gegen das erste Kupplungsteil 1 vermöge einer in der Maschine vorhandenen Vorrichtung zum Einziehen des Zugankers kommt das freie Ende der Lippe 36 in Anlage an die Stützlippe 46. Gleichzeitig liegt die Spitze oder der Kamm des Dornes 50 etwa mittig von oben auf der Lippe 36 auf, wobei "mittig" sich auf die Tiefe des Einschnitts 34 und damit auf die Länge der Lippe 36 bezieht.

Beim weiteren Eindringen des Zapfens 5 in die Nut 25 ist einerseits die Nachgiebigkeit der Lippe 36 aufgrund des zusätzlichen Einfederns der Stützlippe 46 härter. Andererseits drückt der Dorn 50 mit zunehmnender Kraft auf die Lippe 36 und streckt diese gegen die Fläche 53. Fig. 5 zeigt die Kraft F₁, mit der der Dorn 50 auf die Lippe 36 drückt, die sich in einer Querkraft F₃ der Lippe 36 gegen die Fläche 53 auswirkt, sowie die gegen die Eindringrichtung gerichtete Kraft F₂, die von der Stützlippe 46 aufgebracht wird. Bei Aufliegen des Fußes 4 auf dem Oberflächenbereich 24 ist das Anspannen des zweiten Kupplungsteils 15 an das erste Kupplungsteil 1 abgeschlossen.

Der Zapfen 5 wird mit um F₃ erhöhter Klemmkraft gehalten. Andererseits läßt sich das zweite Kupplungsteil 15 leicht vom ersten Kupplungsteil 1 lösen, weil die von der Stützlippe 46 aufgebrachte Gegenkraft F₂ die Freigabe des Zapfens 5 erleichtert.

In der in Figuren 6 und 7 dargestellten weiteren Ausführungsform der Erfindung ist der Mittenbereich des zweiten Kupplungsteils 55 durch eine tiefe Einsenkung 53 ausgenommen, so daß lediglich in den vier Eckbereichen des zweiten Kupplungsteils 55 Pfosten 57 stehenbleiben. Auf der ebenen Oberseite des Pfostens 57 ist zunächst eine Stützfeder 62 aufgebracht (zum Beispiel verschweißt), welche in ihrem über die Einsenkung 53 ragenden Endabschnitt zunächst abwärts und am Ende aufwärts gebogen ist, so daß deren freies Ende 64 nicht ganz die Höhe des Pfostens 57 erreicht.

Auf der Stützfeder 62 ist eine Blattfeder 58 und damit auf dem Pfosten 57 befestigt (zum Beispiel verschweißt), welche sich über die Stützfeder 62 und über die Einsenkung 53 erstreckt. Die Oberseite der Blattfeder 58 bildet bei 52 eine Referenzfläche zur Anlage an eine Gegenfläche 42, die über der Referenzfläche 52 an der Unterseite des ersten Kupplungsteils 40 ausgebildet ist.

Seitlich zu einem aus der Unterseite des ersten Kupplungsteils 40 vorstehenden Zapfen 48 mit konischer Seitenfläche 49 ist über der Einsenkung 53 in einer Bohrung im ersten Kupplungsteil 40 ein Dorn 60 in Form eines zugespitzten Stiftes in Spannrichtung beweglich gehalten und über eine in der Bohrung beherbergte Druckfeder 66 in Spannrichtung federnd gelagert. Die Spitze des Dorns 60 ist etwa oberhalb der Mitte des freien Abschnittes der Blattfeder 58 angeordnet und ragt um den Abstand im Ruhestand aus der Unterseite des ersten Kupplungsteils 40 vor.

Das Zusammenwirken von Zapfen 48 mit Feder 58 beim Spannen der beiden Kupplungsteile 40, 55 geschieht auf gleich Weise, wie das vorstehend anhand der Figuren 2 bis 5 im einzelnen erläutert ist. Es kann daher auf das Vorstehende hierzu Bezug genommen werden. Gemäß Figur 7, die die Kupplungsteile 40, 55 im gespannten Zustand zeigt, drückt der Dorn 60 mittig auf die Blattfeder 58 entgegen der Spannrichtung und die Stützfeder 62 verhindert ein weiteres Nachgeben gegen Spannrichtung aufgrund des eindringenden Zapfens 48.

Es versteht sich, daß der Dorn 60 auch als ein hartelastischer Gummipuffer ausgebildet sein kann, der an dem ersten Kupplungsteil 40 an einer Stelle befestigt ist, die derjenigen des Dorns 60 entspricht. In der praktischen Ausführung der Erfindung empfiehlt es sich, zur Lagefixierung des zweiten Kupplungsteils relativ zum ersten Kupplungsteil in einer zur Einspannrichtung (z-Richtung) und x-Richtung senkrechten y-Richtung ebenfalls die vorstehend anhand der x-Richtung erläuterte Erfindung vorzusehen.

## Patentansprüche

1. Spannvorrichtung mit einem ersten (1; 40) und einem zweiten (15; 55) Kupplungsteil sowie mit Mitteln zum Spannen der beiden Kupplungsteile, wobei das an das erste Kupplungsteil (1; 40) angespannte zweite Kupplungsteil (15; 55) eine vorgegebene Lage in wiederholbarer Präzision relativ zum ersten Kupplungsteil (1; 40) einnimmt, welche Lage in Spannrichtung (z-Richtung) durch wenigstens einen Anschlag (2, 4, 6, 8, 22, 24, 26, 28; 42, 52) und in einer zur Spannrichtung senkrechten Richtung (x-Richtung) durch Zusammenwirken wenigstens eines wenigstens teilweise konischen und in Spannrichtung sich erstreckenden Zapfens (5, 7, 9, 11; 48) mit mindestens einem in Spannrichtung elastischen Federstück (36, 38; 58) definiert ist, dadurch gekennzeichnet, daß ein die Federcharakteristik des Federstückes (36, 38; 58) beim Zusammenwirken beeinflussendes Organ (50, 60; 46, 62) vorgesehen ist.

2. Vorrichtung nach Anspruch 1, dadurch gekennzeichnet, daß das Organ ein Dorn (50, 60) ist, der das Federstück (36, 38; 58) beaufschlagt.

3. Vorrichtung nach Anspruch 2, dadurch gekennzeichnet, daß der Dorn das Federstück entgegen der Spannrichtung beaufschlagt.

4. Vorrichtung nach einem der vorstehenden Ansprüche, dadurch gekennzeichnet, daß das Organ eine unterhalb des Federstücks (36, 38; 58) angeordnete Stützlippe (46; 62) ist.

5. Vorrichtung nach einem der vorstehenden Ansprüche, dadurch gekennzeichnet, daß der Dorn (50; 60) an dem ersten Kupplungsteil (1; 40) ausgebildet ist.

6. Vorrichtung nach einem der vorstehenden Ansprüche, dadurch gekennzeichnet, daß der Dorn (50; 60) an einem Zuganker ausgebildet ist, der zum Spannen beider Kupplungsteile (1, 15; 40, 55) vorgesehen ist.

7. Vorrichtung nach einem der vorstehenden Ansprüche, dadurch gekennzeichnet, daß der Dorn (50, 60) etwa in der Mitte der radialen Länge des Federstücks (36, 38; 58) angeordnet ist.

8. Vorrichtung nach einem der vorstehenden Ansprüche, dadurch gekennzeichnet, daß das Federstück (36, 38) eine aus dem zweiten Kupplungsteil (50) herausgearbeitete Lippe ist.

9. Vorrichtung nach einem der Ansprüche 1 bis 8, dadurch gekennzeichnet, daß das Federstück eine auf dem zweiten Kupplungsteil (55) befestigte Blattfeder (58) ist.

10. Vorrichtung nach einem der vorstehenden Ansprüche, dadurch gekennzeichnet, daß das Organ eine am zweiten Kupplungsteil (15; 55) ausgebildete Stützlippe (46; 62) ist.

11. Vorrichtung nach einem der vorstehenden Ansprüche, dadurch gekennzeichnet, daß der Dorn (50, 60) aus einem hartelastischen Werkstoff besteht.

12. Vorrichtung nach einem der vorstehenden Ansprüche, dadurch gekennzeichnet, daß der Dorn (60) im ersten Kupplungsteil (40) in Spannrichtung federnd gehalten ist.
